(19) **Europäisches Patentamt / European Patent Office / Office européen des brevets**

(11) **EP 2 953 254 B1**

(12) # EUROPEAN PATENT SPECIFICATION

(45) Date of publication and mention of the grant of the patent:
**29.08.2018   Bulletin 2018/35**

(51) Int Cl.:
**H02M 7/48** (2007.01)     **H02M 1/12** (2006.01)

(21) Application number: **15169558.2**

(22) Date of filing: **28.05.2015**

(54) **LIGHT WEIGHT FILTER WITH DC COMMON MODE INDUCTOR FOR ELECTRIC AIRCRAFT MOTOR CONTROLLER**

LEICHTGEWICHTIGER FILTER MIT GLEICHSTROM-INDUKTOR MIT GLEICHTAKTMODUS FÜR ELEKTROFLUGZEUGMOTORSTEUERUNG

FILTRE DE POIDS LÉGER AVEC INDUCTANCE DE MODE COMMUN CC POUR COMMANDE DE MOTEUR D'AÉRONEF ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **03.06.2014   US 201414294442**

(43) Date of publication of application:
**09.12.2015   Bulletin 2015/50**

(73) Proprietor: **Hamilton Sundstrand Corporation Windsor Locks, CT 06096-1010 (US)**

(72) Inventors:
- **FENG, Frank Z.**
  **Loves Park, IL Illinois 61111 (US)**
- **SCHMITT, Dwight D.**
  **Rockford, IL Illinois 61108 (US)**
- **KHERALUWALA, Mustansir**
  **Lake Zurich, IL Illinois 60047 (US)**

(74) Representative: **Dehns**
**St. Brides House**
**10 Salisbury Square**
**London EC4Y 8JD (GB)**

(56) References cited:
**JP-A- 2005 310 991     US-A1- 2009 127 857**

- SHUO WANG ET AL: "Parasitic Effects of Grounding Paths on Common-Mode EMI Filter's Performance in Power Electronics Systems", IEEE TRANSACTIONS ON INDUSTRIAL ELECTRONICS, IEEE SERVICE CENTER, PISCATAWAY, NJ, USA, vol. 57, no. 9, 1 September 2010 (2010-09-01), pages 3050-3059, XP011298019, ISSN: 0278-0046
- RANGARAJAN M TALLAM ET AL: "Integrated differential-mode and common-mode filter to mitigate the effects of long motor leads on AC drives", ENERGY CONVERSION CONGRESS AND EXPOSITION (ECCE), 2010 IEEE, IEEE, PISCATAWAY, NJ, USA, 12 September 2010 (2010-09-12), pages 838-845, XP031787126, ISBN: 978-1-4244-5286-6
- HANIGOVSZKI N ET AL: "A novel output filter topology to reduce motor overvoltage", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, vol. 1, 12 October 2003 (2003-10-12), pages 445-451, XP010676058, DOI: 10.1109/IAS.2003.1257538 ISBN: 978-0-7803-7883-4

- ONUR CETIN N ET AL: "Compatibility Issues Between the Filter and PWM Unit in Three-Phase AC Motor Drives Utilizing the Pure Sine Filter Configuration", IEEE TRANSACTIONS ON INDUSTRY APPLICATIONS, IEEE SERVICE CENTER, PISCATAWAY, NJ, US, vol. 47, no. 6, 1 November 2011 (2011-11-01), pages 2559-2569, XP011371438, ISSN: 0093-9994, DOI: 10.1109/TIA.2011.2168935

**Description**

BACKGROUND

The present invention relates generally to motor controllers, and more particularly, to reducing the weight of motor controllers used in aircraft.

A motor controller commonly includes an inverter. The inverter converts a direct current input to an alternating current output. The switching action of an inverter produces common mode noise and differential mode noise. Common mode noise radiates through air and interferes with adjacent sensitive electronic equipment. Differential mode noise produces high voltage spikes on motor feeder cables causing corona at high altitude. Both common mode and differential mode noises degrade motor insulation systems. As such, attenuation of common mode and differential mode noise is essential for the safe operation of aircraft.

The combination of common mode and differential mode filters is used to reduce the common mode and differential mode noise in a state of the art motor controller circuit. The common mode filter may include an inductor to reduce common mode noise in the motor controller circuit. Differential mode filters are placed on the input or output side of the motor controller and reduce differential mode noise on the corresponding input or output side of the motor controller circuit. For example, in a state of the art motor controller in which the inverter outputs three phase alternating current, typically, the inductor is located on the output side of the inverter and has three separate inductors, one for each phase. The inductor windings and the magnetic core are constructed from materials that are generally dense materials, such as copper and steel, which make the inductor a heavy component relative to the other motor controller components.

Motor controllers are used in many applications; however, in some applications, such as in aircraft, the motor controller weight is an important design consideration because light-weight components improve fuel efficiency or aircraft load capacity. Because decreasing aircraft weight continues to be a goal for aircraft manufacturers, a need exists to reduce the weight of motor controllers used in aircraft.

SUMMARY

A motor controller has a direct current input, inverter, common mode filter, differential mode filter, and an output terminal. The direct current input is electrically connected to the common mode filter. The common mode filter is electrically connected to the inverter. The inverter is electrically connected in to the differential mode filter. The differential mode filter is electrically connected to the output terminal. The common mode filter is configured to attenuate common mode noise and is located on the input side of the inverter. The differential mode filter attenuates differential mode noise and is located on the output side of the inverter.

A motor system includes a motor controller as described above that also has a direct current supply, a feeder cable, and an electric motor. The direct current supply is electrically connected to the direct current input of the motor controller. The feeder cable is electrically connected to the output terminal and to the electric motor.

The present invention is defined in claim 1.

BRIEF DESCRIPTION OF THE DRAWINGS

FIG. 1 is a schematic view of a prior art motor controller configured with an alternating current common mode inductor.
FIG. 2 is a perspective view of the prior art alternating current common mode inductor of FIG. 1.
FIG. 3 is a schematic view of a motor controller configured with a direct current common mode inductor.
FIG. 4 is a perspective view of the direct current common mode inductor of FIG. 3.

DETAILED DESCRIPTION

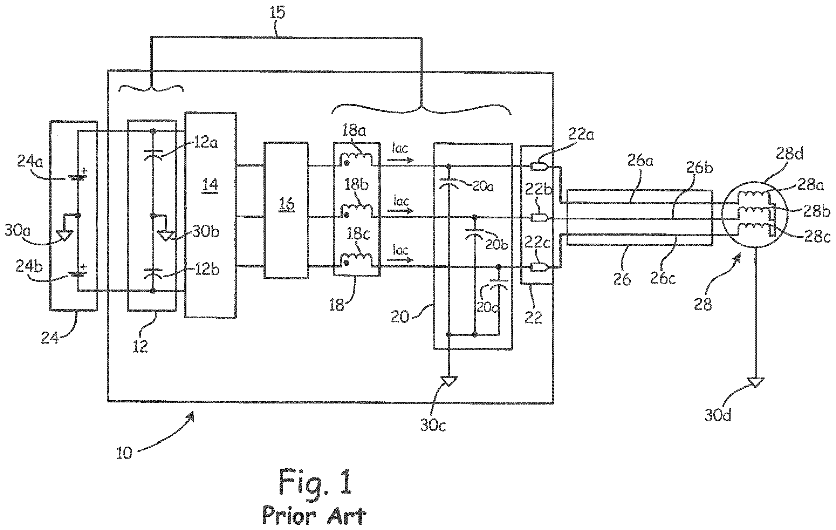

FIG. 1 is a schematic view of prior art motor controller 10. Motor controller 10 includes inverter 14, common mode filter 15, differential mode filter 16, and terminal 22. Common mode filter 15 comprises direct current capacitor group 12, common mode inductor 18, and alternating current capacitor group 20. When motor controller 10 is integrated into a motor system, direct current source 24 is electrically connected to direct current capacitor group 12, which is electrically connected to the input of inverter 14. Inverter 14 is electrically connected to differential mode filter 16, which is electrically connected to common mode inductor 18 and alternating current capacitor group 20. Alternating current capacitor group 20 is electrically connected to terminal 22. Electric motor 28 is electrically connected to motor controller 10 by feeder cable 26.

Motor controller 10 receives power from direct current source 24 and supplies alternating current to electric motor 28 through feeder cable 26. Direct current source 24, capacitor groups 12 and 20, and electric motor 28 are electrically connect to common ground 30a, 30b, 30c, and 30d respectively. Direct current source 24 has a positively charged conductor and a negatively charged conductor and may include direct current components 24a and 24b.

Direct current capacitor group 12 may include capacitors 12a and 12b. In motor controller 10, capacitors 12a and 12b are arranged in series. A side of capacitor group 12 is electrically connected to the negatively charged conductor of direct current source 24 and an opposing side is electrically connected to the positively charged conductor of direct current source 24. Common ground 30b is electrically connected between capacitors 12a and 12b.

Inverter 14, which converts a direct current input to an alternating current output, can be any inverter of conventional design. In motor controller 10, inverter 14 converts a direct current input to a three-phase, alternating-current output. Associated with each phase is a conductor that electrically connects inverter 14 to differential mode filter 16.

Differential mode filter 16 attenuates differential mode noise within motor controller 10, and can be any differential mode filter of conventional design. In motor controller 10, differential mode filter 16 is configured for three-phase alternating current and has a conductor associated with each phase that electrically connects it to common mode inductor 18.

Common mode inductor 18 attenuates common mode noise within motor controller 10. In a typical prior art motor controller such as the motor controller shown in FIG. 1, common mode inductor 18 is configured for three-phase alternating current and has windings 18a, 18b, and 18c. Common mode inductor 18 is placed on the output side of inverter 14.

Alternating current capacitor group 20 may include capacitors 20a, 20b, and 20c. Capacitor 20a is electrically connected between the first phase of common mode inductor 18 and common ground 30c. Capacitor 20b is electrically connected between the second phase of common mode inductor 18 and common ground 30c. Capacitor 20c is electrically connected between the third phase of common mode inductor 18 and common ground 30c.

Terminal 22 provides motor controller 10 with an output interface. In motor controller 10, terminal 22 has three terminal connections 22a, 22b, and 22c that are electrically connected to the first phase, the second phase, and the third phase respectively.

Feeder cable 26 connects electric motor 28 to terminal 22. Feeder cable 26 is unshielded and has conductors 26a, 26b, and 26c each electrically insulated from the others.

Electric motor 28 is a three phase motor with first phase 28a, second phase 28b, and third phase 28c. Electric motor 28 is electrically connected to terminal 22 by feeder cable 26. In motor controller 10, phases 28a, 28b, and 28c are electrically connected on one end to conductors 26a, 26b, and 26c respectively and to each other on the opposing end. Housing 28d encloses electric motor 28 and is electrically connected to common ground 30d.

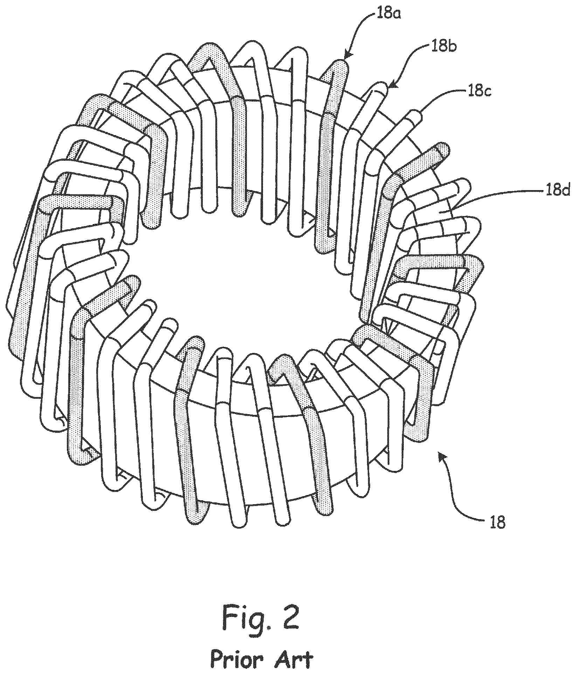

FIG 2. is a perspective view of prior art common mode inductor 18. Common mode inductor includes windings 18a, 18b, and 18c and magnetic core 18d. Magnetic core 18d is cylindrical and can be composed of any suitable magnetic material, for example steel. Windings 18a, 18b, and 18c are wrapped around magnetic core 18d forming a toroid winding scheme and are made from a conductive material, for example copper. Successive loops of winding 18a are adjacent to windings 18b and 18c such that a repeating pattern of windings 18a, 18b, and 18c is formed around magnetic core 18d. Windings 18a, 18b, and 18c each contain one or more conductors that are electrically insulated from each other and from the adjacent windings.

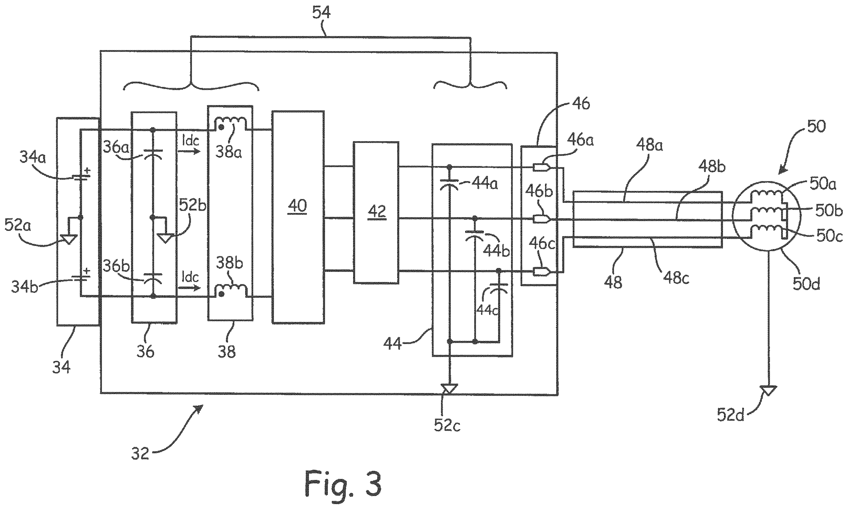

FIG. 3 is a schematic view of motor controller 32. Motor controller 32 includes inverter 40, common mode filter 54, differential mode filter 42, and output terminal 46. Common mode filter 54 comprises direct current capacitor group 36, alternating current capacitor group 44, and common mode inductor 38. Common mode inductor 38 is placed on the input side of inverter 40 where it attenuates common mode noise within motor controller circuit 32 and is configured for direct current. Motor controller 32 receives direct current power from direct current source 34, which may include direct current components 34a and 34b, and supplies alternating current to electric motor 50 through feeder cable 48. Direct current source 34, capacitor groups 36 and 44, and electric motor 50 are electrically connect to common ground 52a, 52b, 52c, and 52d respectively. In this embodiment, the input and output requirements of motor controller 32 are comparable to motor controller 10 (FIG. 1).

Direct current capacitor group 36 may include capacitors 36a and 36b. In motor controller 32, capacitors 36a and 36b are arranged in series. A side of the capacitor group 36 is electrically connected to the negatively charged conductor of direct current source 34 and an opposing side is electrically connected to the positively charged conductor of direct current source 34. Common ground 52b is electrically connected between capacitors 36a and 36b.

Common mode inductor 38 is a component within common mode filter 54 that is configured to attenuate common mode noise within motor controller 32, for example common mode noise emanating from inverter 40. In this embodiment, common mode inductor 38 is configured for direct current and located on the input side of inverter 40. For passing direct current and attenuating common mode noise, common mode inductor 38 has windings 38a and 38b. Winding 38a is electrically connected to the positive side of capacitor group 36 and inverter 40, and winding 38b is electrically connected to the negative side of capacitor group 36 and inverter 40.

Inverter 40, which can be either a two-level or a three-level design, converts a direct current input into an alternating current output, using pulse-width modulation (PWM) methods. In motor controller 32, inverter 40 converts a direct current input to a three-phase alternating current output. Associated with each phase is a conductor that electrically connects inverter 40 to differential mode filter 42.

Differential mode filter 42 attenuates differential mode noise in motor controller 32, for example differential mode noise emanating from inverter 40. Differential mode filter 42 can be any differential mode filter of conventional design, for example, a three-phase low pass LC filter. Motor controller 32 receives power from direct current source 34. Direct current source 34 may be any conventional direct current source that provides direct current to direct current common mode filter 36.

Alternating current capacitor group 44 may include capacitors 44a, 44b, and 44c. Capacitor 44a is electrically connected between the first phase of differential mode filter 42 and common ground 52c. Capacitor 44b is electrically connected between the second phase of differential mode filter 42 and common ground 52c. Capacitor 20c is electrically connected between the third phase of differential mode filter 42 and common ground 52c.

Terminal 46 provides motor controller 32 with an output interface. In this embodiment, terminal 46 has three terminal connections 46a, 46b, and 46c that are electrically connected to the first phase, the second phase, and the third phase respectively.

Feeder cable 48 connects electric motor 50 to terminal 46. Feeder cable 48 can be shielded or unshielded. In this embodiment, feeder cable 48 is unshielded and configured to operate in a three-phase alternating current circuit. A typical length of feeder cable 48 is approximately 30 meters. Feeder cable 48 has conductors 48a, 48b, and 48c each electrically insulated from the others. Providing feeder cable 48 without shielding reduces the weight of feeder cable 48.

Electric motor 50 is a three phase motor with first phase 50a, second phase 50b, and third phase 50c. Electric motor 50 is electrically connected to terminal 46 by feeder cable 48. In this embodiment phases 50a, 50b, and 50c are electrically connected on one end to conductors 48a, 48b, and 48c respectively and to each other on the opposing end. Housing 50d encloses electric motor 50 and is electrically connected to common ground 52d. In an aircraft application, electric motor 50 may be used to actuate an aircraft component.

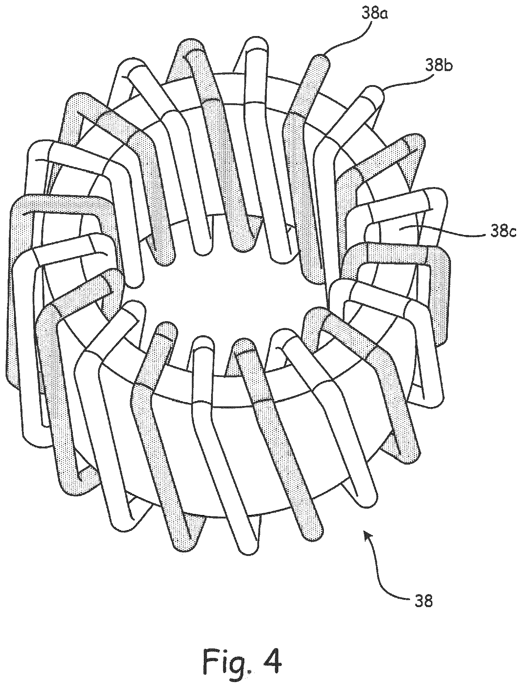

FIG. 4 is a perspective view of common mode inductor 38. Common mode inductor includes windings 38a and 38b and magnetic core 38c. Magnetic core 38c is cylindrical and can be composed of any suitable magnetic material, for example steel. Windings 38a and 38b are wrapped around magnetic core 38c forming a toroid winding scheme and are made from a conductive material, for example copper. Successive loops of winding 38a are adjacent to winding 38b such that a repeating pattern of windings 38a and 38b is formed around magnetic core 38c. Windings 38a and 38b each contain one or more conductors that are electrically insulated from each other and from the adjacent windings.

Since the input and output requirements of motor controller 32 are comparable to motor controller 10 (FIG. 1), common mode inductor 38 has less weight than common mode inductor 18 (FIG. 1) because common mode inductor 38 is located on the input side of inverter 40 instead of the output side. Because direct current Idc passing through common mode inductor 38 is approximately equal to alternating current Iac passing through common mode inductor 18 (FIG. 1) of comparable motor controllers 32 and 10 (FIG. 1), windings 38a and 38b in common mode inductor 38 have a similar cross-section to windings 18a, 18b, and 18c (FIG. 1) found in common mode inductor 18 (FIG. 1). The ratio of the direct current, Idc, passing through common mode inductor 38 in motor controller 32 and the alternating current, Iac, passing through common mode inductor 18 of motor controller 10 is approximately equal to one as shown below.

$$Idc = \frac{Pdc}{2(Vdc)(M)} = \frac{Pdc}{2(Vdc)} \text{ for } M = 1.0$$

$$Iac = \frac{Pdc}{3}\left(\frac{1}{\frac{Vdc}{\sqrt{2}}}\right)$$

$$\frac{Idc}{Iac} = \frac{3}{2\sqrt{2}} \approx 1$$

where,

Idc = DC input current
Iac = AC output current
Pdc = DC input power
Pac = AC output power
M = Modulation index
Vdc = DC input voltage across 34a and 34b

Therefore, using the configuration of motor controller 32 instead of the configuration of motor controller 10 eliminates one winding from direct current inductor 38 and reduces the weight of common mode inductor 38 by approximately 23% as shown below.

$$Mass_{dc} \propto \left[(2)(Idc)\right]^{.75}$$

$$Mass_{ac} \propto \left[(3)(Iac)\right]^{.75}$$

$$\frac{Mass_{dc}}{Mass_{ac}} = \frac{\left[(2)(Idc)\right]^{.75}}{\left[(3)(Iac)\right]^{.75}} = \left(\frac{1}{\sqrt{2}}\right)^{.75} = .77$$

Weight savings = 1 - .77 = .23
where,

Idc = DC input current (as defined above)
Iac = AC output current (as defined above)
Mass$_{dc}$ = common mode inductor 38 weight (2 windings)

Mass$_{ac}$ = common mode inductor 18 weight (3 windings)

Discussion of Embodiments

The following are non-exclusive descriptions of possible embodiments of the present invention.

A motor controller can include a direct current input, a common mode filter, an inverter, a differential mode filter, and an output terminal. The common mode filter can be electrically connected to the direct current input and comprises a common mode inductor configured to attenuate common mode noise. The inverter can have a direct current input connected to the common mode inductor and an alternating current output. The differential mode filter can be electrically connected to the inverter output and can be configured to attenuate differential mode noise. The output terminal can be electrically connected to the differential mode filter.

A further embodiment of the foregoing motor controller can optionally include, additionally and/or alternatively, any one or more of the following features, configurations, and/or additional components:

A further embodiment of the foregoing motor controller can include a common mode inductor that has a cylindrical magnetic core, a first winding, and a second winding. The first and second windings are wrapped around the magnetic core and the second winding is adjacent to the first winding.

A further embodiment of any of the foregoing motor controllers can include a common mode filter that has a first capacitor and a second capacitor. The first and second capacitors are electrically connected in series.

A further embodiment of any of the foregoing motor controllers can include a two-level, three-phase inverter that is controlled with pulse-width modulation.

A further embodiment of any of the foregoing motor controllers can include a three-level, three-phase inverter that is controlled with pulse-width modulation.

A motor system can include a direct current source, a direct current input, a common mode filter, an inverter, a differential mode filter, an output terminal, a feeder cable, an electric motor, and a common ground. The direct current input can be electrically connected to the direct current source. The common mode filter can be configured to attenuate common mode noise. The common mode filter can be electrically connected to the direct current input and can include a common mode inductor. The inverter can be electrically connected to the common mode inductor and can be configured to receive a direct current input and produce an alternating current output. The differential mode filter can be electrically connected to the inverter output and can be configured to attenuate differential mode noise. The output terminal can be configured to be electrically connected to the differential mode filter. The electric motor can be configured to operate on alternating current. The feeder cable can electrically connect the electric motor to the output terminal.

A further embodiment of the foregoing motor system can optionally include, additionally and/or alternatively, any one or more of the following features, configurations, and/or additional components:

A further embodiment of the foregoing motor system can include a common mode inductor that has a cylindrical magnetic core, a first winding, and a second winding. The first and second windings are wrapped around the magnetic core and the second winding is adjacent to the first winding.

A further embodiment of any of the foregoing motor systems can include a common mode filter that has a first capacitor and a second capacitor. The first and second capacitors are electrically connected in series.

A further embodiment of any of the foregoing motor systems can include a two-level, three-phase inverter that is controlled with pulse-width modulation.

A further embodiment of any of the foregoing motor systems can include a three-level, three-phase inverter that is controlled with pulse-width modulation.

A further embodiment of any of the foregoing motor systems can include a feeder cable that is unshielded.

A further embodiment of any of the foregoing motor systems can have the inverter output, the differential mode filter, the feeder cable, and the electric motor configured to operate on three-phase alternating current. The electrical connections between such components can have a first conductor, a second conductor, and a third conductor.

A further embodiment of the foregoing motor system can have an electric motor with a first phase, a second phase, and a third phase that are connected to the first, second, and third conductors respectively and the common ground.

A further embodiment of any of the foregoing motor systems can have an electric motor with a housing that is electrically connected to the common ground.

A further embodiment of any of the foregoing motor systems can have an electric motor that actuates a component within an aircraft.

**Claims**

1. A motor controller (32) comprising:

   a direct current input;
   a common mode filter (54) configured to attenuate common mode noise, wherein the common mode filter is electrically connected to the direct current input, the common mode filter comprising:
   a common mode inductor (38);
   an inverter (40) having a direct current input and an alternating current output,
   a differential mode filter (42) configured to attenuate differential mode noise; wherein the differential mode filter is electrically connected to the inverter output; and

an output terminal, wherein the output terminal is electrically connected to the differential mode filter (42); wherein the common mode filter (54) further comprises:

> a first capacitor (36a);
> a second capacitor (36b), wherein the first capacitor and the second capacitor are electrically connected in series; and
> a third capacitor (44a);

> a fourth capacitor (44b); and
> a fifth capacitor (44c) wherein the third, fourth and fifth capacitors are electrically connected, respectively, between first, second and third conductors of the inverter alternating current output and a common ground; and wherein the inverter output and differential mode filter (42) are configured to operate on three phase alternating current, and wherein the electrical connections between adjacent components each have a first conductor, a second conductor, and a third conductor

**characterized in that**
the inverter input is electrically connected to the common mode inductor (38).

2. The motor controller of claim 1, wherein the common mode inductor comprises:

> a magnetic core (38c), wherein the magnetic core has a generally cylindrical shape;
> a first winding (38a) wrapped around the magnetic core; and
> a second winding (38b) wrapped around the magnetic core, wherein the first winding is adjacent to the second winding.

3. The motor controller of claim 1, wherein the inverter has a two-level, three-phase output that is controlled with pulse-width modulation.

4. The motor controller of claim 1, wherein the inverter has a three-level, three-phase output that is controlled with pulse-width modulation.

5. A motor system comprising:

> a direct current source (34);
> a motor controller as claimed in any preceding claim, wherein the direct current input is electrically connected to the direct current source;
> a feeder cable (48), wherein the feeder cable is electrically connected to the output terminal;

an electric motor (50) configured to operate on alternating current, and the electric motor is electrically connected to the feeder cable; and
a common ground (52).

6. The motor system of claim 5, wherein the feeder cable is unshielded.

7. The motor system of claim 5, wherein the electric motor has a first phase, a second phase, and a third phase, and wherein the first, second, and third phases of the electric motor are electrically connected to a first, second, and third conductors of the feeder cable respectively and the common ground.

8. The motor system of claim 5, wherein the electric motor has a housing, and wherein the housing is electrically connected to the common ground.

**Patentansprüche**

1. Motorsteuerung (32), umfassend:

> einen Gleichstromeingang;
> einen Gleichtaktfilter (54), der dazu konfiguriert ist, Gleichtaktrauschen zu dämpfen, wobei der Gleichtaktfilter mit dem Gleichstromeingang elektrisch verbunden ist, wobei der Gleichtaktfilter umfasst:
> einen Gleichtaktinduktor (38);
> einen Wechselrichter (40) mit einem Gleichstromeingang und einem Wechselstromausgang;
> einen Gegentaktfilter (42), der dazu konfiguriert ist, Gegentaktrauschen zu dämpfen, wobei der Gegentaktfilter mit dem Wechselrichterausgang elektrisch verbunden ist; und
> einen Ausgangsanschluss, wobei der Ausgangsanschluss mit dem Gegentaktfilter (42) elektrisch verbunden ist; wobei der Gleichtaktfilter (54) ferner umfasst:
> einen ersten Kondensator (36a);
> einen zweiten Kondensator (36b), wobei der erste Kondensator und der zweite Kondensator elektrisch in Reihe geschaltet sind; und
> einen dritten Kondensator (44a);
> einen vierten Kondensator (44b); und
> einen fünften Kondensator (44c), wobei der dritte, vierte und fünfte Kondensator jeweils zwischen dem ersten, zweiten und dritten Leiter des Wechselrichterwechselstromausgangs und einer gemeinsamen Masse elektrisch verbunden sind; und wobei
> der Wechselrichterausgang und der Gegentaktfilter (42) dazu konfiguriert sind, mit Drehstrom zu arbeiten, und wobei die elektrischen Verbindungen zwischen benachbarten Komponenten jeweils einen ersten Leiter, einen zweiten Leiter und einen dritten Leiter aufweisen, **dadurch gekennzeichnet, dass** der Wechselrichtereingang mit dem Gleichtaktinduktor (38) elektrisch verbunden ist.

**2.** Motorsteuerung nach Anspruch 1, wobei der Gleichtaktinduktor umfasst:

einen Magnetkern (38c), wobei der Magnetkern eine allgemein zylindrische Form aufweist; eine erste Wicklung (38a), die um den Magnetkern gewickelt ist; und eine zweite Wicklung (38b), die um den Magnetkern gewickelt ist, wobei die erste Wicklung benachbart zur zweiten Wicklung ist.

**3.** Motorsteuerung nach Anspruch 1, wobei der Wechselrichter einen zweistufigen Dreiphasenausgang aufweist, der mittels Impulsbreitenmodulation gesteuert wird.

**4.** Motorsteuerung nach Anspruch 1, wobei der Wechselrichter einen dreistufigen Dreiphasenausgang aufweist, der mittels Impulsbreitenmodulation gesteuert wird.

**5.** Motorsystem, umfassend:

eine Gleichstromquelle (34); eine Motorsteuerung nach einem der vorangehenden Ansprüche, wobei der Gleichstromeingang mit der Gleichstromquelle elektrisch verbunden ist; ein Speisekabel (48), wobei das Speisekabel mit dem Ausgangsanschluss elektrisch verbunden ist; einen Elektromotor (50), der dazu konfiguriert ist, mit Wechselstrom zu arbeiten, und wobei der Elektromotor mit dem Speisekabel elektrisch verbunden ist; und eine gemeinsame Masse (52).

**6.** Motorsystem nach Anspruch 5, wobei das Speisekabel nicht geschirmt ist.

**7.** Motorsystem nach Anspruch 5, wobei der Elektromotor eine erste Phase, eine zweite Phase und eine dritte Phase aufweist, und wobei die erste, zweite und dritte Phase des Elektromotors jeweils mit einem ersten, zweiten und dritten Leiter des Speisekabels und der gemeinsamen Masse elektrisch verbunden sind.

**8.** Motorsystem nach Anspruch 5, wobei der Elektromotor ein Gehäuse aufweist und wobei das Gehäuse mit der gemeinsamen Masse elektrisch verbunden ist.

**Revendications**

**1.** Un contrôleur de moteur (32) comprenant :

une entrée de courant continu ; un filtre de mode commun (54) configuré pour atténuer le bruit de mode commun, dans lequel le filtre de mode commun est connecté électriquement à l'entrée de courant continu, le filtre de mode commun comprenant :

un inducteur en mode commun (38) ; un inverseur (40) ayant une entrée de courant continu et une sortie de courant alternatif, un filtre de mode différentiel (42) configuré pour atténuer le bruit de mode différentiel ; dans lequel le filtre de mode différentiel est électriquement connecté à la sortie de l'inverseur ; et une borne de sortie, dans laquelle la borne de sortie est connectée électriquement au filtre de mode différentiel (42) ; dans lequel le filtre de mode commun (54) comprend en outre :

un premier condensateur (36a) ; un deuxième condensateur (36b), dans lequel le premier condensateur et le deuxième condensateur sont connectés électriquement en série ; et un troisième condensateur (44a) ;

un quatrième condensateur (44b) ; et un cinquième condensateur (44c) dans lequel les troisième, quatrième et cinquième condensateurs sont connectés électriquement, respectivement, entre les premier, deuxième et troisième conducteurs de la sortie de courant alternatif de l'inverseur et une masse commune ; et dans lequel la sortie de l'inverseur et le filtre de mode différentiel (42) sont configurés pour fonctionner sur un courant alternatif triphasé, et dans lequel les connexions électriques entre des composants adjacents ont chacun un premier conducteur, un deuxième conducteur et un troisième conducteur **caractérisé en ce que** l'entrée de l'inverseur est électriquement connectée à l'inducteur en mode commun (38).

**2.** Contrôleur de moteur selon la revendication 1, dans lequel l'inducteur en mode commun comprend :

un noyau magnétique (38c), dans lequel le noyau magnétique a une forme généralement cylindrique ; un premier enroulement (38a) enroulé autour du noyau magnétique ; et

un second enroulement (38b) enroulé autour du noyau magnétique, dans lequel le premier enroulement est adjacent au second enroulement.

3. Contrôleur de moteur selon la revendication 1, dans lequel l'inverseur a une sortie triphasée à deux niveaux qui est commandée avec une modulation de largeur d'impulsion.

4. Contrôleur de moteur selon la revendication 1, dans lequel l'inverseur a une sortie triphasée à trois niveaux qui est commandée avec une modulation de largeur d'impulsion.

5. Système de moteur comprenant :

une source de courant continu (34) ;
un contrôleur de moteur selon une quelconque revendication précédente, dans lequel l'entrée de courant continu est électriquement connectée à la source de courant continu ;
un câble d'alimentation (48), dans lequel le câble d'alimentation est connecté électriquement à la borne de sortie ;
un moteur électrique (50) configuré pour fonctionner en courant alternatif, et le moteur électrique est connecté électriquement au câble d'alimentation ; et
une masse commune (52).

6. Système de moteur selon la revendication 5, dans lequel le câble d'alimentation est non blindé.

7. Système de moteur selon la revendication 5, dans lequel le moteur électrique a une première phase, une deuxième phase et une troisième phase, et dans lequel les première, deuxième et troisième phases du moteur électrique sont électriquement connectées à un premier, deuxième, et troisième conducteur du câble d'alimentation respectivement et la masse commune.

8. Système de moteur selon la revendication 5, dans lequel le moteur électrique a un boîtier, et dans lequel le boîtier est relié électriquement à la masse commune.

Fig. 1
Prior Art

Fig. 2
Prior Art

Fig. 3

Fig. 4